# EUROPÄISCHE PATENTANMELDUNG

(11) **EP 3 777 608 A1**
(43) Veröffentlichungstag der Anmeldung: **17.02.2021**
(21) Anmeldenummer: 20191422.3
(22) Anmeldetag: 17.08.2020
(51) Int. Cl.: A47B 83/02, B60N 3/00, B60P 3/36, A47B 3/083, A47B 9/20, A47B 13/02

(54) **SITZGRUPPE**

(30) Priorität: 16.08.2019 DE 102019122082
(71) Anmelder: Hymer GmbH & Co. KG, 88339 Bad Waldsee (DE)
(72) Erfinder: Sawetzki, Bernhard, 88364 Wolfegg (DE); Hepe, Dominik, 68212 Ravensburg (DE)
(74) Vertreter: Waller, Stefan

(57) **Zusammenfassung**

Bei einer Sitzgruppe für ein Campingfahrzeug oder Freizeitfahrzeug, wobei die Sitzgruppe (1) mindestens ein Sitzmöbel (3) sowie mindestens einen Tisch (2) mit einer Tischplatte (6) und einem Tischfuß (4) umfasst, ist der Tisch (2) mit dem Tischfuß (4) auf bzw an einer Führung (10) befestigt, wobei die Führung (10) ein Verschieben des Tischfußes (4) entlang eines definierten, insbesondere geradlinigen Pfads in Richtung des Sitzmöbels (3) bis zur Anlage an das Sitzmöbel (3) ermöglicht und führt.

## Beschreibung

Die Erfindung betrifft eine Sitzgruppe für ein Campingfahrzeug oder ein sonstiges Freizeitfahrzeug.

Sitzgruppen finden in Campingfahrzeugen wie Wohnmobile, Wohnwägen oder ausgebauten Kastenwägen, aber auch in anderen Fahrzeugen, wie z.B. Booten oder dergleichen Anwendung.

Üblicherweise umfassen diese Sitzgruppen Sitzmöbel sowie mindestens einen Tisch, wobei der Tisch oftmals in seiner Anordnung und/oder Höhe verstellbar ausgebildet ist, um eine Nutzung der Sitzgruppe als Schlafplatz zu ermöglichen.

Problematisch ist oftmals, dass die Sitzgruppe, insbesondere der Tisch der Sitzgruppe, einen erheblichen Bestandteil des zur Verfügung stehenden Stauraums belegt oder dessen Nutzung erschwert. Es ist daher aus dem Stand der Technik bekannt, den Tisch höhenverstellbar auszubilden, so dass er z.B. in eine Ebene mit der Sitzgruppe verfahren werden kann, und damit einen Stauraum in dieser Ebene bietet oder als Schlafgelegenheit nutzbar ist. Überdies sind Tische bekannt, welche an einer Seitenwand des Fahrzeugs befestigt sind, und zur Freigabe von Stauraum an diese Seitenwand geklappt werden können.

Aufgabe der Erfindung ist es, die Nutzbarkeit des Stauraums im Bereich einer Sitzgruppe weiter zu verbessern.

Die Erfindung schlägt dazu eine Sitzgruppe für ein Campingfahrzeug oder Freizeitfahrzeug vor, wobei die Sitzgruppe mindestens ein Sitzmöbel sowie mindestens einen Tisch mit einer Tischplatte und einem Tischfuß umfasst, wobei der Tisch mit dem Tischfuß auf bzw. an einer Führung befestigt ist. Dabei ist vorgesehen, dass die Führung ein Verschieben des Tischfußes entlang eines definierten, insbesondere geradlinigen Pfads in Richtung des Sitzmöbels bis zur Anlage an das Sitzmöbel ermöglicht und führt.

Die Bewegung des Tisches über einen geführten Pfad mittels einer Führung bietet die Möglichkeit, dem Tisch einen definierten Standort zuzuweisen, um ihn z.B. während der Fahrt oder der Nutzung des Stauraums optimal zu positionieren. Dabei bleibt der Tisch im Bereich der Führung befestigt und es bedarf keiner zusätzlichen Sicherungsmaßnahmen, z.B. während der Fahrt des Fahrzeugs.

Eine bevorzugte Ausführungsform sieht vor, dass der Tischfuß höhenverstellbar, insbesondere teleskopierbar, bevorzugt dreistufig teleskopierbar ausgebildet ist. Auf diese Weise kann der Tisch sowohl in seiner Position über die Führung als auch in seiner Höhe optimal positioniert werden.

Eine Weiterbildung sieht überdies vor, dass die Tischplatte einen Träger und mindestens ein, vorzugsweise zwei Plattensegmente umfasst, wobei mindestens ein, vorzugsweise zwei Plattensegmente an dem Träger schwenkbar gelagert sind.

Die Plattensegmente sind dabei an dem Träger befestigt, wobei der Träger wiederum an dem Tischfuß befestigt ist. Mindestens ein Plattensegment ist dabei an dem Träger schwenkbar gelagert. Auf diese Weise kann ein Plattensegment nach unten oder oben geklappt bzw. geschwenkt werden, so dass es in einer vertikalen Ausrichtung im Raum orientiert ist und damit zusätzlichen Stauraum freigibt.

Überdies bevorzugt ist vorgesehen, dass die Führung als Läufer oder Schlitten ausgebildet ist und zumindest teilweise unter das Sitzmöbel eintaucht.

Die Ausbildung der Führung als Läufer oder Schlitten erlaubt ein einfaches Bewegen des Tisches entlang des Pfads. Dazu können die Befestigungsmittel sowie etwaige Querkraft aufnehmende Haltespangen oder dergleichen unterhalb des Sitzmöbels, außerhalb des möglicherweise zur Nutzung vorgesehenen Stauraums im Fußraum der Sitzgruppe angeordnet werden.

Ein Schlitten im Sinne der Erfindung ist dabei sowohl ein auf der Oberfläche des Laufbodens aufliegendes Element, welches den Tischfuß trägt und die Bewegung ermöglicht, als auch ein Läufer in z.B. einer in den Laufboden eingelassenen Schiene.

Es ist weiterhin bevorzugt vorgesehen, dass das Sitzmöbel einen Möbelkorpus mit einer Korpushöhe und eine auf dem Möbelkorpus aufgelegte Polsterauflage umfasst und der Tisch in seiner zu dem Pfad parallelen Ausdehnung (Tischbreite) maximal dem doppelten Betrag der Korpushöhe entspricht.

Durch eine Dimensionierung des Tisches in maximal dem doppelten Betrag der Korpushöhe kann erzielt werden, dass der von der Tischplatte versperrte Stauraum eine definierte Dimension erhält, so dass Gegenstände im verbleibenden Raum angeordnet werden können.

Insbesondere im Ausführungsfall der klappbaren Tischplatte besteht damit die Möglichkeit, die Tischplatte in der Mitte, parallel zu einer dem Tisch zugewandten Vorderkante der Polsterauflage nach unten zu klappen, und damit die vertikale Höhe der Tischplatte auf den Betrag der Korpushöhe oder darunter zu reduzieren.

Eine überdies bevorzugte Ausgestaltung sieht vor, dass der Tisch Mittel zur Höhenverstellung der Tischplatte umfasst, wobei die Mittel zur Höhenverstellung eine Absenkung der Tischplatte bis auf die Korpushöhe oder darunter ermöglichen.

Durch Absenkung der Tischplatte auf die Korpushöhe kann die Tischplatte den darüber gegebenen Stauraum freigeben bzw. z.B. als Liegefläche nutzbar machen.

Insbesondere im oben beschriebenen auf zwei Hälften geklappten Zustand besteht die Möglichkeit, den Tisch an den Möbelkorpus heran zu fahren, und so im Bereich vollständig oder teilweise unterhalb der Polsterauflage oder daran anliegend zu verstauen.

Die Erfindung soll anhand der nachfolgend beschriebenen Ausführungsbeispiele näher erläutert werden, ist jedoch nicht auf die dargestellte Ausführungsform beschränkt.

Dabei zeigen
- Fig. 1: Eine Sitzgruppe mit zentral angeordnetem aufgeklapptem Tisch,
- Fig. 2: die Sitzgruppe mit einseitig abgeklappter Tischplatte,
- Fig. 3: die Sitzgruppe mit an das Sitzmöbel herangefahrenem Tisch (Pultbetrieb),
- Fig. 4: die Sitzgruppe mit beidseitig abgeklappter Tischplatte,
- Fig. 5: die Sitzgruppe mit abgesenkter Tischplatte vor der Bewegung in Richtung des Sitzmöbels und
- Fig. 6: die Verstauposition der geklappten, abgesenkten Tischplatte.

Gleiche Bestandteile sind über die Figuren mit gleichen Bezugszeichen versehen.

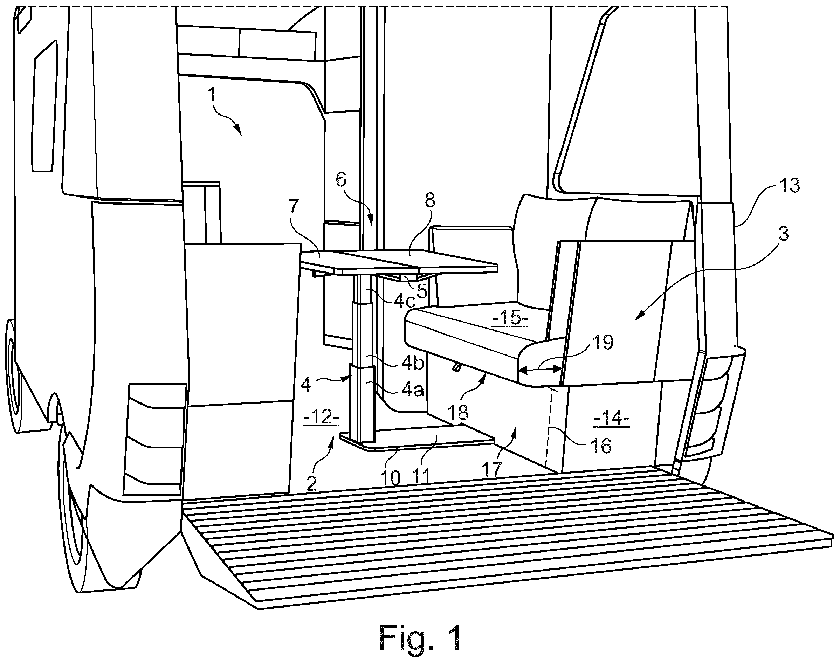

Im Einzelnen zeigt Fig. 1 eine Sitzgruppe 1 mit zentral angeordnetem aufgeklapptem Tisch 2. Die Sitzgruppe umfasst vorliegend zwei Sitzmöbel 3, wobei das linksseitig ausgebildete Sitzmöbel vorliegend nicht vollständig dargestellt ist.

Der Tisch 2 umfasst einen Tischfuß 4, welcher als teleskopierbarer Tischfuß 4 mit drei Teleskopkästen 4a, 4b und 4c ausgebildet ist. Am oberen Ende des Tischfuß 4, befestigt am oberen Teleskopkasten 4c ist ein Träger 5 angeordnet, welcher die Tischplatte 6 des Tisches 2 trägt.

Die Tischplatte 6 ist vorliegend zweiteilig ausgebildet und umfasst ein linkes Plattensegment 7 und ein rechtes Plattensegment 8.

Der Tisch 2 ist mit dem unteren Ende des Tischfußes 4, über den unteren Teleskopkasten 4a mit einer Führung 10 verbunden. Die Führung 10 ist vorliegend als plattenartiger Schlitten 11 ausgebildet und ragt unter das Sitzmöbel hinein. Die Führung 10 in Form des Schlittens 11 kann auf der Laufboden 12 des Fahrzeugs 13 gleiten, indem entweder die Unterseite des Schlittens 11 eine entsprechende Gleitschicht aufweist oder über Rollen oder Lager verfügt. Auch andere Methoden der Führung sind im Sinne der Erfindung denkbar.

Das Sitzmöbel 3 umfasst einen Möbelkorpus 14 sowie eine darauf angeordnete Polsterauflage 15. Der Möbelkorpus definiert dabei über eine Korpushöhe 16 einen Freiraum 17, welcher zwischen dem Laufboden 12 und der Unterkante 18 der Polsterauflage 15 in einem vorderseitig überstehenden Bereich 19 der Polsterauflage 15 existiert.

Der Heckbereich des Stauraums des Fahrzeugs 13 ist in diesem Zustand vom Tisch 2 zentrisch belegt, so dass ein Durchgehen oder Beladen nicht, oder nur erschwert möglich ist.

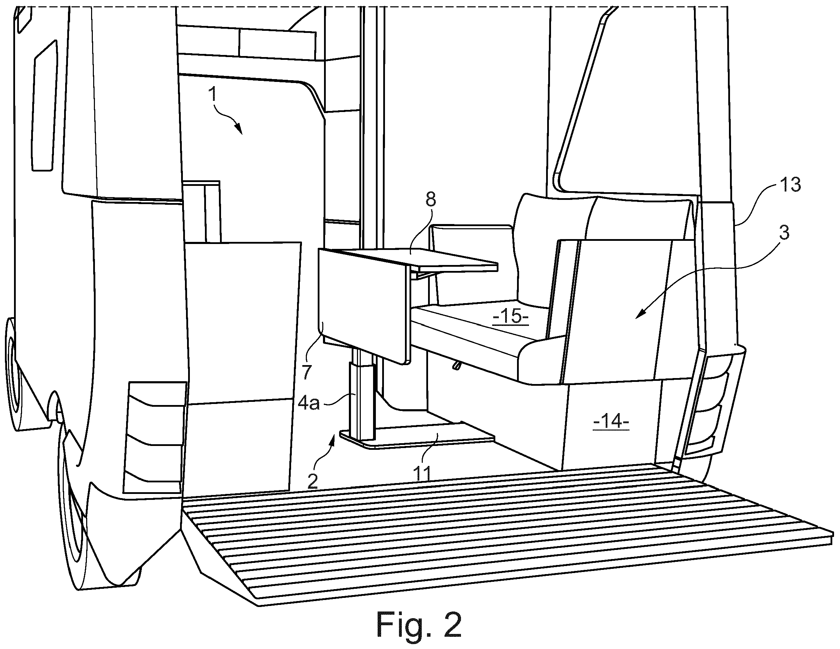

Figur 2 zeigt die Sitzgruppe 1 mit einseitig abgeklapptem linken Plattensegment 7 am Tisch 2.

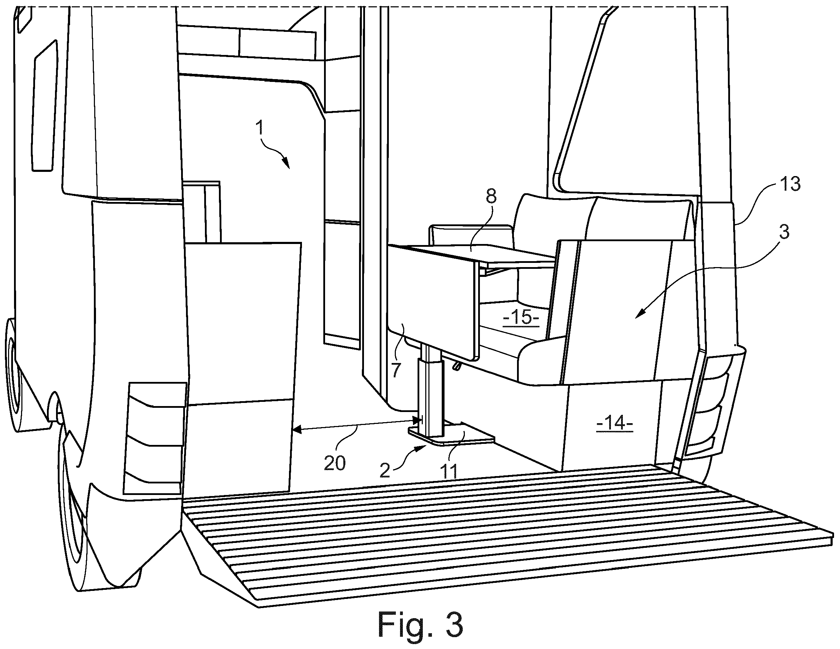

Figur 3 zeigt sodann die Sitzgruppe 1 mit abgeklapptem Plattensegment 7 entsprechend Figur 2, jedoch nunmehr mit an das Sitzmöbel 3 herangefahrenem Tisch 2. In diesem Zustand taucht der Schlitten 11 in den Bereich unterhalb des Möbelkorpus 14 tiefer ein, so dass der noch waagerechte Teil der Tischplatte 6 in Form des rechten Plattensegments 8 für einen auf dem Sitzmöbel 3 sitzenden Nutzer als eine Art Pult nutzbar ist, ohne dass der Stauraum 20 des Fahrzeugs 13 belegt ist, oder ein Durchgang behindert wird.

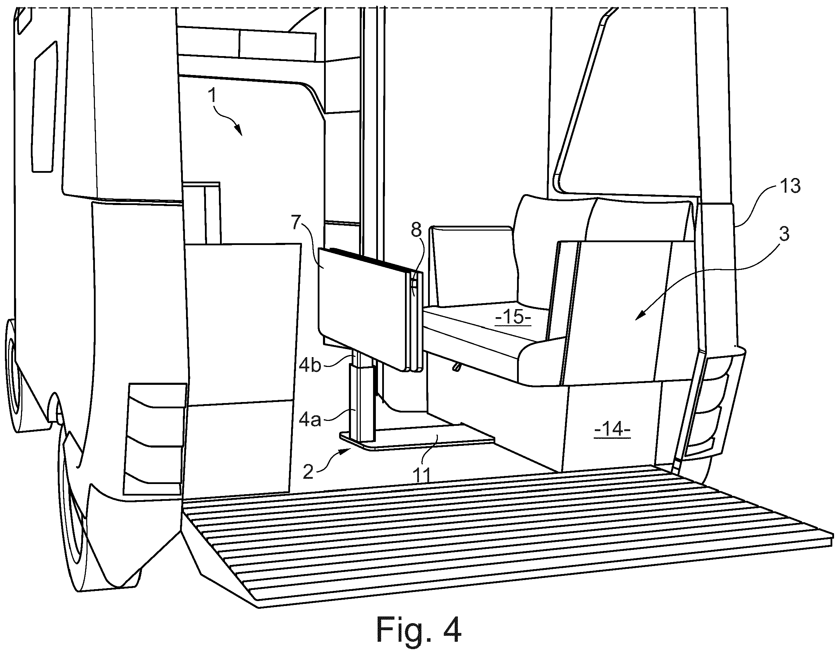

Figur 4 zeigt nunmehr die die Sitzgruppe 1 mit beidseitig abgeklappten Plattensegmenten 7 und 8 am Tisch 2.

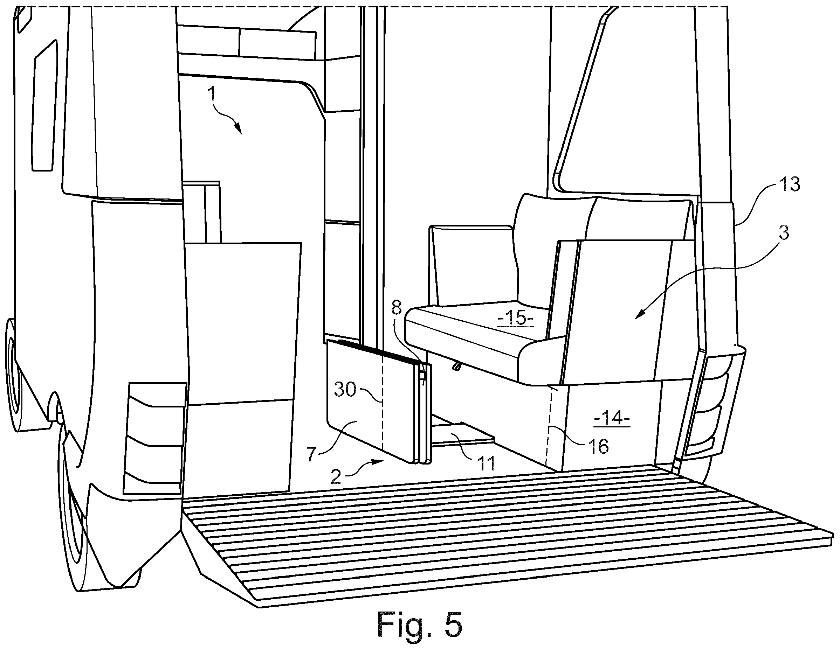

In Figur 5 ist die Sitzgruppe 1 mit abgesenkter Tischplatte 6 in abgeklapptem Zustand der Plattensegmente 7 und 8 entsprechend Figur 4 dargestellt. Dabei wurde der Tischfuß 4 bereits durch ineinanderschieben der Teleskopkästen 4a, 4b und 4c nach unten abgesenkt, so dass die Plattensegmente 7 und 8 in vertikaler Ausrichtung die maximale Höhe 30 des Tisches 2 in diesem Zustand definieren.

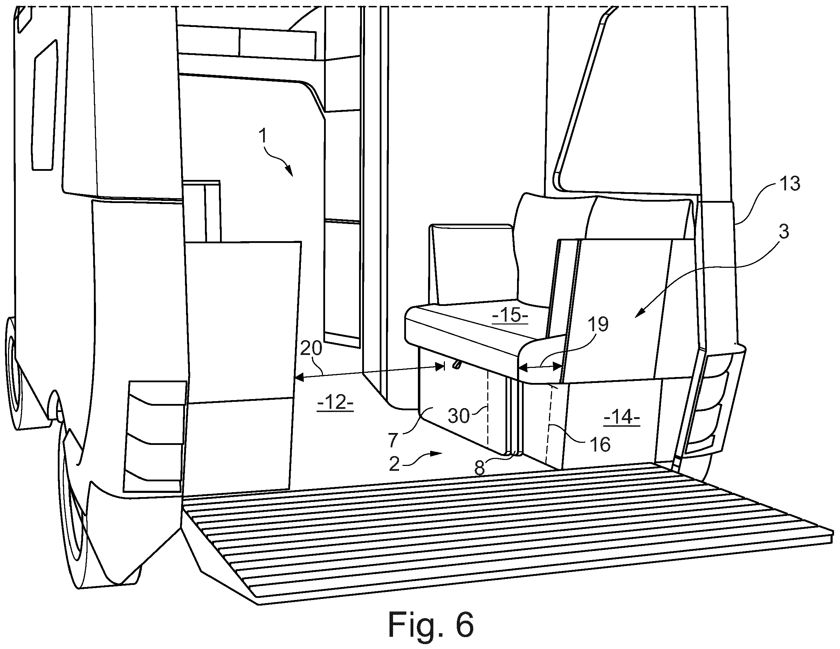

Figur 6 zeigt sodann die Verstauposition des Tisches in dem Freiraum 17 unterhalb der Polsterauflage 15 des Sitzmöbels 3.

Die Höhe 30 des Tisches 2 in diesem Zustand ist so dimensioniert, dass diese gleicht oder kleiner der Korpushöhe 16 ausgebildet ist, um somit in den Freiraum 17 eintreten zu können.

Durch die Anordnung des zusammengeklappten, abgesenkten Tisches 2 unterhalb des überstehenden Bereichs 19 der Polsterauflage 15 ist der Stauraum 20 im Heckbereich des Fahrzeugs 13 optimal nutzbar und kann auf der gesamten Breite beladen oder begangen werden.

## Patentansprüche

1. Sitzgruppe für ein Campingfahrzeug oder Freizeitfahrzeug, wobei die Sitzgruppe (1) mindestens ein Sitzmöbel (3) sowie mindestens einen Tisch (2) mit einer Tischplatte (6) und einem Tischfuß (4) umfasst,
**dadurch gekennzeichnet,**
**dass** der Tisch (2) mit dem Tischfuß (4) auf bzw an einer Führung (10) befestigt ist, wobei die Führung (10) ein Verschieben des Tischfußes (4) entlang eines definierten, insbesondere geradlinigen Pfads in Richtung des Sitzmöbels (3) bis zur Anlage an das Sitzmöbel (3) ermöglicht und führt.

2. Sitzgruppe nach Anspruch 1,
**dadurch gekennzeichnet,**
**dass** der Tischfuß (4) höhenverstellbar, insbesondere teleskopierbar, bevorzugt dreistufig teleskopierbar ausgebildet ist.

3. Sitzgruppe nach Anspruch 1 oder 2,
**dadurch gekennzeichnet,**
**dass** die Tischplatte (6) einen Träger (5) und mindestens ein, vorzugsweise zwei Plattensegmente (7,8) umfasst, wobei mindestens ein, vorzugsweise zwei Plattensegmente (7,8) an dem Träger (5) schwenkbar gelagert sind.

4. Sitzgruppe nach einem der vorangegangenen Ansprüche,
**dadurch gekennzeichnet,**
**dass** die Führung (10) als Läufer oder Schlitten (11) ausgebildet ist und zumindest teilweise unter das Sitzmöbel (3) eintaucht.

5. Sitzgruppe nach einem der vorangegangenen Ansprüche,
**dadurch gekennzeichnet,**
**dass** das Sitzmöbel (3) einen Möbelkorpus (14) mit einer Korpushöhe (16) und eine auf dem Möbelkorpus (14) aufgelegte Polsterauflage (15) umfasst und der Tisch (2) in seiner zu dem Pfad parallelen Ausdehnung (Tischbreite) maximal dem doppelten Betrag der Korpushöhe (16) entspricht.

6. Sitzgruppe nach einem der vorangegangenen Ansprüche,
**dadurch gekennzeichnet,**
**dass** der Tisch (2) Mittel zur Höhenverstellung der Tischplatte (6) umfasst, wobei die Mittel eine Absenkung der Tischplatte (6) bis auf die Korpushöhe (16) oder darunter ermöglichen.
